# EUROPÄISCHE PATENTSCHRIFT

(11) **EP 1 754 580 B1**
(45) Veröffentlichungstag und Bekanntmachung des Hinweises auf die Patenterteilung: **13.10.2010**
(21) Anmeldenummer: 06017013.1
(22) Anmeldetag: 16.08.2006
(51) Int. Cl.: B27D 5/00, B29C 63/04

(54) **Maschine zum Ummanteln oder Beschichten von Profilen mit Folie**
Apparatus for wrapping or coating profiles with a film
Dispositif pour recouvrir ou revêtir des profilés avec un film

(30) Priorität: 17.08.2005 DE 102005039158; 29.11.2005 DE 102005057227
(43) Veröffentlichungstag der Anmeldung: 21.02.2007
(73) Patentinhaber: PIRAS Metalltechnik GmbH & Co. KG, 95163 Weissenstadt (DE)
(72) Erfinder: Piras, Guido, 95163 Weissenstadt (DE); Bauer, Armin, 95709 Tröstau (DE)
(74) Vertreter: Küchler, Stefan

(56) Entgegenhaltungen:
- EP-A- 0 997 260
- WO-A-2006/008578

## Beschreibung

Die Erfindung richtet sich auf eine Maschine zum Ummanteln oder Beschichten von Profilen mit Folie, umfassend Rollen, Bürsten, Rakel und/oder andere Mittel zum Heranführen und/oder Anpressen der Folie an das betreffende Profil.

Derartige bekannte Kaschiermaschinen umfassen ein langgestrecktes Gerüst mit einer Vielzahl von unterseitigen Laufrollen und diesen zugeordneten, oberseitigen Führungs- und/oder Andrückrollen. Dabei wird das zu beschichtende Profil auf den unterseitigen Laufrollen antransportiert; die aufzukaschierende Folie läuft von einer darüber oder darunter angeordneten Vorratstrommel ab und wird von den Führungsrollen an eine oder mehrere Seiten des Profils synchron zu diesem herangeführt und dort festgedrückt.

EP-A-997260 zeigt eine Maschine nach dem Oberbegriff des Anspruches 1.

Eine derartige Anlage ist bspw. in der Offenlegungsschrift DE 30 34 182 A1 offenbart. Dort sind oberseitige Rollen an Armen gelagert, die vertikal herabgeschwenkt werden können, bspw. um die Rollen fest anzupressen. Eine Anpassung an unterschiedliche Profilquerschnitte ist damit jedoch nicht möglich.

Bei dem Dokument DE 42 32 697 A1 sind die verschiedenen Walzen zwar in unterschiedlichen Winkelstellungen angeordnet; diese Winkelstellungen sind jedoch entweder fest vorgegeben oder allenfalls um einige Winkelgrade verstellbar, so dass damit keine universelle Anpassungsmöglichkeit an die unterschiedlichsten Profilquerschnitte gegeben ist.

Bei der DE 100 24 926 A1 sind die Zuführ- oder Andruckrollen an Haltearmen angeordnet, welche an Halteringen befestigt sind. Die Haltearme können zwar entlang der Halteringe verstellt werden; dies muß beim Umrüsten einer Maschine jedoch manuell erfolgen, und zwar einzeln für eine Vielzahl von entlang der Transportrichtung hintereinander angeordneten Rollen bzw. Haltearmen. Lediglich bei einer Ausführungsform mit in zwei Hälften unterteiltem Haltering können die beiden Ringhälften motorisch auseinander und zusammen gefahren werden. Dies ist jedoch in vielen Fällen nicht ausreichend, weil oftmals Profile mit unterschiedlich gegeneinander geneigten Oberflächen zu kaschieren sind.

Dem Gebrauchsmuster DE 88 06 277 U1 ist eine Maschine zum Ummanteln von Werkstücken zu entnehmen. Dabei können die einzelnen Rollen zwar motorisch in verschiedene Richtungen verschoben werden; eine Verdrehung ist jedoch wiederum erst dann möglich, wenn ein Klemmstück manuell gelöst wird, mit dem der eine Rolle tragende Gabelrollenhalter an einer Werkzeugstange in unterschiedlichen Positionen undloder Winkelstellungen festklemmbar ist.

Aus den beschriebenen Nachteilen des obigen Standes der Technik resultiert das die Erfindung initiierende Problem, die Verstellmöglichkeit für die Zuführ- und/oder Andrückmittel einer gattungsgemäßen Kaschiermaschine derart weiterzubilden, dass eine Anpassung an die unterschiedlichsten Profilquerschnitte mit beliebig zueinander geneigten Oberflächenbereichen in einem kürzestmöglichen Zeitraum erfolgen kann, so dass auch Spezialanfertigungen mit einer kleinen Stückzahl von zu kaschierenden Profilen ohne Beschränkung auf bestimmte Querschnitte wirtschaftlich hergestellt werden können.

Die Lösung dieser Aufgabe erfolgt gemäß Anspruch 1.

Der wirksame, d.h. führende bzw. anpressende Bereich eines Zuführ- oder Anpreßmittels - bspw. die Mantelfläche einer Zuführ- oder Andrückrolle - verläuft meist quer zu der Transportrichtung des zu beschichtenden Profils; allerdings kann eine leichte Schrägstellung vorteilhaft für die Lenk- und Spannwirkung sein. Dieser wirksame Bereich liegt dabei in einer Ebene, die der Transportrichtung folgt. Da auch alle Längsseiten eines zu beschichtenden Profils eine derartige Ausrichtung aufweisen, läßt sich ein erfindungsgemäß gehaltenes Zuführ- oder Anpreßmittel stets parallel zu jeder Längsseite eines Profils ausrichten. Da dies außerdem motorisch erfolgen kann, läßt sich die gewünschte Einstellung in einem kürzesten Zeitraum vornehmen. Bestimmte Zielpositionen können dabei ggf. sogar in einem Speichermedium einer Steuereinheit für den/die betreffenden Antriebsmotor(en) hinterlegt sein und sodann auf Anforderung von dort abgerufen werden. Als Verstellmotor eignet sich besonders ein Motor, dem die Antriebsleistung elektrisch zugeführt ist, bspw. ein Gleich-, Wechsel- oder Drehstrommotor oder ein Servo-, EC- oder Schrittmotor. Elektrische Energie kann sehr fein dosiert eingesetzt werden, so dass eine hochgenaue Positionierung möglich ist. Bevorzugt befindet sich der Verstellmotor radial außerhalb des Trägers, so dass der Bewegungsbereich eines radial innerhalb desselben gehaltenen Zuführ- oder Anpreßmittels dadurch nicht eingeschränkt wird.

Es liegt im Rahmen der Erfindung, dass der Verstellmotor drehfest mit einem oder mehreren Antriebsrädern, -rollen und/oder -schnecken gekoppelt ist, das/die an (je) einer Seite oder Spur des Trägers entlangrollt (-en) und/oder mit einer dort angebrachten Verzahnung kämmt (-en). Ein solches Antriebsrad kann als Zahnrad oder Schnecke ausgebildet sein, so dass trotz leichtgängiger Verschiebbarkeit eine exakte und reproduzierbar konstante Übersetzung der Drehbewegung eines Verstellmotors in eine dazu proportionale Verschiebung des Halterungschassis gewährleistet ist. Anstelle einer Führungsrolle kann auch eine radial am Umfang anliegende Schnecke zum Antrieb verwendet werden.

Die erfindungsgemäße Konstruktion ließe sich weiter optimieren durch eine Einrichtung zur Arretierung des Chassis gegenüber dem Träger in jeder Verstellposition entlang desselben. Durch diese Arretierung wird eine bspw. durch Vibrationen ausgelöste, selbsttätige und daher unerwünschte Verstellung einer Halterung vermieden. Eine Möglichkeit zur Realisierung einer solchen Arretierungseinrichtung bestünde in einer schaltbaren Bremse. Eine solche Bremse könnte bspw. über zwei Klemmbacken verfügen, welche im Arretierungszustand den Träger zwischen sich einklemmen. Jedoch bevorzugt die Erfindung, den Verstellmotor oder dessen Koppeleinrichtung mit den Antriebsrädern oder -rollen selbsthemmend auszubilden, so dass die Halterung nach dem Stillsetzen des Motors in der einmal angefahrenen Position verharrt und die zusätzliche Ansteuerung einer Bremse nicht erforderlich ist. Als selbsthemmende Kopplung ist ein untersetzendes Getriebe verwendbar, über welches der Verstellmotor mit den Antriebsrädern oder -rollen gekoppelt ist.

Dadurch kann gleichzeitig ein üblicherweise schnell rotierender Motor eingesetzt werden, dessen hohes Schwungmoment der rotierenden Läufermasse einer gleichförmigen Drehbewegung zuträglich ist. Eine Variante eines solchen, untersetzenden Getriebes ist ein Schneckentrieb, wobei an der Abtriebsachse des Verstellmotors eine Schnecke befestigt ist, die mit einem Schneckenrad kämmt.

Obzwar der Träger auch selbst verdrehbar gelagert sein könnte, empfiehlt die Erfindung, diesen an einem Chassis, vorzugsweise dem Chassis der Kaschiermaschine, insbesondere in radialer Richtung bezüglich der Transportrichtung eines Profils unverrückbar festzulegen und stattdessen die einzelnen Halterungen für Zuführ- oder Anpreßmittel daran entlangzufahren. Dies hat den Vorteil, dass ggf. mehrere Halterungen an ein und demselben Träger montiert und bei Bedarf unabhängig voneinander verstellt werden können. Insbesondere in Längsrichtung eines zu beschichtenden Profils kann eine Verschiebung der Träger durchaus möglich sein, wobei solchenfalls eine Verschiebung wahlweise manuell oder kraftbetätigt erfolgen kann.

Indem wenigstens ein Träger mit einer Führungsbahn für ein Zuführ- oder Anpreßmittel und/oder dessen Führungsbahn einem zumindest bereichsweise gekrümmten Verlauf folgt, kann er die Transportrichtung der Kaschiermaschine zumindest bereichsweise umgreifen.

Gleichzeitig sollte der Träger mit einer Führungsbahn für ein Zuführ- oder Anpreßmittel und/oder dessen Führungsbahn in einer Ebene verlaufen, welche vorzugsweise von der Transportrichtung der Kaschiermaschine lotrecht durchsetzt wird.

Zwar läßt die Erfindung auch eine Realisierung zu, wobei die Führungsbahn entlang einer zumindest abschnittsweise elliptischen und/oder mehreckigen Bahn mit abgerundeten Ecken verläuft. Bevorzugt verläuft der Träger jedoch entlang einer Kreisbahn. Dadurch erhält man eine geometrisch besonders einfache, mechanisch beherrschbare und steuerungstechnisch überschaubare Anordnung.

Der Träger kann sich entlang eines beliebigen Zentrumswinkels erstrecken. Besonders bewährt hat sich ein Zentrumswinkel von 90° oder mehr, vorzugsweise von 180° oder mehr, insbesondere von 270° oder mehr. Je größer dieser Zentrumswinkel ist, um so weiter ist der potentielle Verstellbereich der Halterungen für Zuführ- oder Anpreßmittel. Aus herstellungstechnischen Erwägungen könnte der Träger auch als geschlossener Ring ausgeführt sein, da ein solcher in mancherlei Hinsicht einfacher hergestellt und/oder bearbeitet werden kann; dies ist jedoch nicht erforderlich, da die Unterseite des Profils von einer herkömmlichen Rollenbahn unterstützt wird. In vielen, keineswegs aber in allen Fällen befinden sich an der Unterseite des Profils keine Führungs- oder Andrückmittel.

Es hat sich als günstig erwiesen, dass der Träger zumindest in seinem oberen Bereich ungeteilt ausgeführt ist. Dadurch ist es den entlang des Trägers verstellbaren Halterungen möglich, bei Bedarf an dem gesamten Träger entlangzufahren. Bspw. können bei mehreren, an dem Träger vorgesehenen Halterungen alle schnell von einer Seite des Trägers zur anderen wechseln oder auch vertikal von oben nach unten drücken.

Der Träger kann aus einem Ring von gleichbleibendem, ursprünglich etwa rechteckigem Querschnitt gearbeitet sein. Solche Ringe sind mit unterschiedlichsten Querschnitten im Handel erhältlich. Ggf. kann mit einem geringen Aufwand ein Segment aus einem solchen Ring herausgetrennt werden; außerdem sind querschnittverändemde Bearbeitungen möglich, bspw. das Anfasen von Kanten, etc.

Wenn die längere Achse des Ring(segments) mit rechteckigem Querschnitt radial bezüglich des Mittelpunkts des Trägers verläuft, ergibt sich insgesamt eine in Transportrichtung eines zu beschichtenden Profils sehr schmale Ausdehnung der erfindungsgemäßen Halterung, so dass diese in sehr kurzen Abständen hintereinander gereiht werden können und/oder in den Zwischenräumen noch Platz für weitere Einrichtungen lassen.

Indem eine oder mehrere Kanten des Ring(segments) abgeschrägt sind, ergibt sich ein mehreckiger Querschnitt, dessen ggf. schräge Seiten auch als Spuren zur Führung der eigentlichen Halterung verwendbar sind.

Vorzugsweise ist wenigstens eine Seite des Trägers mit einer Zahnreihe versehen, in die bspw. ein Zahnrad oder eine Schnecke eingreifen kann, welche sich an der Halterung für ein Zuführ- oder Anpreßmittel abstützt und bei einer an der Zahnreihe abrollenden Drehbewegung die Halterung an dem Träger entlangschiebt. Dadurch ist eine schlupffreie Koppelung zwischen dem Träger und einer darauf abrollenden Antriebseinheit gegeben, und deshalb läßt sich mittels eines an dem Antriebsmotor angekoppelten Lagegebers oder durch Zählen der Ansteuerschritte eines Schrittmotors eindeutig die jeweilige Position der betreffenden Halterung gegenüber dem Träger feststellen, als Grundlage für eine punktgenaue Regelung eines vorgegebenen Positionswertes. Um eine optimale Schlupffreiheit zu garantieren, sollte die Zahnreihe direkt in den Grundkörper des Trägers für die Führungsbahn eingearbeitet sein, bspw. eingefräst.

Die Erfindung erlaubt eine Weiterbildung dahingehend, dass das Chassis den Träger umgreift. Dadurch ergibt sich eine optimale Führung des Chassis an wenigstens zwei etwa diametral gegenüberliegenden Umfangsbereichen des Querschnitts des Trägers. Dies ist besonders wichtig, da über die Andrückmittel hohe Kräfte auf die gesamte Mechanik eingeleitet werden und möglichst starr, d.h., ohne jegliche innere Bewegungen, an das Chassis der Kaschiermaschine weitergegeben werden sollen.

Dem Erfindungsgedanken folgend, können wenigstens zwei Antriebsräder oder - rollen an einander etwa diametral gegenüberliegenden Umfangsbereichen des Trägers entlangrollen. Somit ist nicht nur der Antrieb als Rad oder Rolle ausgebildet, sondern auch die eigentliche Führung. Das Ergebnis ist eine besonders reibungs- und damit auch verschleißarme Führung, die eine hohe Betriebsdauer hat. Wahlweise oder ggf. zusätzlich kann/können ein oder mehrere Antriebsräder oder -rollen an den Seiten als Seitenhalt vorgesehen sein.

Die Erfindung empfiehlt, für die Halterung eine Lageregelung vorzusehen, welche während des gesamten Kaschierbetriebs aktiv ist und die betreffende Halterung auch bei äußeren Verstelltendenzen an der einmal angefahrenen Position hält. Um dabei eine vorgegebene Position präzise anfahren und ggf. einhalten zu können, läßt sich an dem Verstellmotor direkt oder indirekt ein Lagegeber ankoppeln. Hierfür könnte bspw. ein Inkrementalgeber verwendet werden. Allerdings ist dies nicht zwingend erforderlich, sofern der Verstellmotor insbesondere als Schrittmotor ausgebildet ist. Dann kann die Lage des Motors und damit auch die Position der Halterung gegenüber dem Träger auch durch Abzählen der an den Motor abgegebenen Schaltimpulse ermittelt werden.

Die Relativposition einer Halterung gegenüber dem Träger könnte evtl. auch direkt ermittelt werden, indem entlang des Trägers eine maschinenlesbare Skala angeordnet wird und an dem Chassis der Halterung eine dafür geeignete Leseeinrichtung. Dafür eignet sich u.a. eine optische Abtastung, bspw. mittels eines Lasers. Die Relativbewegung zwischen Chassis und Träger kann auch mittels Indexbohrungen erfaßt werden.

Weitere Einstellmöglichkeiten erlaubt eine Konstruktion, wobei wenigstens ein Zuführ- oder Anpreßmittel ferner um eine zu der Transportrichtung eines zu beschichtenden Profils etwa parallele bzw. zu der Ebene des Trägers etwa lotrechte Achse verschwenkbar ist. Zur Verbesserung der Lenk- und/oder Spannwirkung kann eine leichte Winkelstellung eines oder mehrerer Zuführ- oder Anpreßmittel vorteilhaft sein. Damit ist es möglich, eine quer zur Transportrichtung eines zu beschichtenden Profils orientierte Anpreßfläche eines Zuführ- oder Anpreßmittels bzw. eine quer zu dieser Transportrichtung verlaufende Drehachse eines rollenförmigen Zuführ- oder Anpreßmittels gegenüber einer tangential zu einer Kreisbahn um das zu beschichtende Profil gerichteten Orientierung in eine dazu schiefe Richtung zu verschwenken. Der Vorteil ist, dass dadurch nahezu jedes beliebig gestaltete Profil beschichtet werden kann.

Zur Realisierung einer derartigen Verstellbarkeit sieht die Erfindung vor, dass an wenigstens einem den Träger umgreifenden Chassis ein verschwenkbarer Ansatz vorgesehen ist, der die Verbindung zu dem eigentlichen Führungs- oder Anpreßmittel herstellt. Ein solches Gelenk schafft den gewünschten, zusätzlichen Freiheitsgrad der Bewegung. Aus Platzgründen sollte ein solcher Ansatz seitlich an dem Chassis angeordnet sein, d.h., in Transportrichtung eines zu beschichtenden Profils versetzt. Dadurch ist der zulässige Schwenkbereich nicht durch den Träger eingeschränkt.

Zwecks Einstellung der Schwenkrichtung des Ansatzes läßt sich an dem den Träger umgreifenden Chassis ein zweiter Verstellmotor anordnen, dessen Abtriebsachse drehfest mit einer seitlich aus dem Chassis austretenden, zu der Transportrichtung eines zu beschichtenden Profils etwa parallelen Verstellachse gekoppelt ist. Aufgrund des seitlichen Versatzes zwischen Chassis und Ansatz liegt letzterer außerhalb der Ebene des Trägers, und es bereitet daher keine Schwierigkeiten, den Verstellmotor radial außerhalb des Trägers unterzubringen, wo er die Bewegungsfreiheit der Halterung nicht beeinträchtigt.

Zwar soll das zusätzliche Gelenk einen höheren Freiheitsgrad der Bewegung ermöglichen, um eine universelle Anpassung an jeden erdenklichen Profilquerschnitt zu erlauben; andererseits muß während eines Kaschiervorgangs auch dieses Gelenk völlig starr sein, um den nötigen Anpreßdruck auf das zu kaschierende Profil aufzubringen. Es ist demnach eine Arretierungsmöglichkeit vorzusehen. Diese könnte wiederum in einer zusätzlichen Bremse bestehen; erfindungsgemäß wird jedoch abermals bevorzugt, den zweiten Verstellmotor oder dessen Koppelung mit der seitlich aus dem Chassis austretenden Verstellachse selbsthemmend auszubilden, so dass bei stillgesetztem Motor keine selbsttätige Verstellung des Schwenkwinkels zu befürchten ist. Für eine solche selbsthemmende Kopplung eignen sich alle oben in Bezug auf den ersten Motor aufgezählten Möglichkeiten, insbesondere auch ein Schneckengetriebe. Ggf. könnte auch an diesem Gelenk bzw. Verstellmotor eine Lageregelung vorgenommen werden.

Der seitliche Ansatz des Chassis kann drehfest mit der seitlich aus dem Chassis austretenden Verstellachse verbunden sein, bspw. völlig starr verschraubt oder verschweißt, über einen Formschluß zwischen einem oder mehreren Keilen und einer oder mehreren Nuten, od. dgl..

Ferner wird unterschiedlichen Querschnittsabmessungen eines zu beschichtenden Profils dadurch Rechnung getragen, dass wenigstens ein Zuführ-oder Anpreßmittel überdies in jeweils etwa radialer Richtung bezogen auf seinen Verbindungspunkt an dem Träger verstellbar ist. Die damit geschaffene Bewegungsmöglichkeit entspricht demnach einer Verschiebung, die stets etwa lotrecht zu der an dem Profil anliegenden Fläche gerichtet ist. Das betreffende Zuführ- oder Anpreßmittel kann demnach stets von einem Profil zurückgezogen bzw. schonend an dieses herangefahren werden.

Diese Verstellmöglichkeit wird dadurch herbeigeführt, dass an einem in Transportrichtung eines zu beschichtenden Profils gegenüber der Ebene des Trägers versetzten Ansatz eines entlang des Trägers verstellbaren Chassis eine Führung für ein längliches, das eigentliche Führungs- oder Andrückmittel tragendes Maschinenteil vorgesehen ist. Bevorzugt ist das längliche Maschinenteil aus einem Grundkörper mit konstantem Querschnitt gearbeitet, so dass eine Verschiebung in einem entsprechend geformten Führungsteil verdrehsicher möglich ist.

Entsprechend der gewünschten Verschiebungsrichtung sollte die Längsachse des länglichen Maschinenteils schief oder lotrecht zu der Transportrichtung eines zu beschichtenden Profils verlaufen, so dass der radiale Abstand des Führungs- oder Andrückmittels zu dem zu beschichtenden Profil verändert werden kann.

Außerdem empfiehlt es sich, die Längsachse des länglichen Maschinenteils etwa parallel zu der Ebene des Trägers zu orientieren, weil dann die von dem Andruckmittel aufgenommenen Kräfte etwa in einer zu der Grundebene des Trägers parallelen Ebene übertragen werden und solchenfalls die auf den Träger lotrecht zu dessen Grundebene einwirkenden Hebelkräfte gering bleiben, so dass einerseits der Träger mit einem vergleichsweise dünnen Querschnitt ausgebildet sein kann und andererseits auch die Führungen von ungünstigen Hebelkräften weitgehend verschont werden.

Die Erfindung erfährt eine weitere Optimierung dadurch, dass das längliche Maschinenteil wenigstens eine (in seiner Längsrichtung verlaufende) Zahnreihe oder ein Gewinde aufweist und verdrehsicher gelagert ist. Damit läßt sich ein Formschluß in Längsrichtung des länglichen Maschinenteils bewirken, und ein Schlupf infolge hoher, von dem betreffenden Führungs- oder Andrückmittel aufgenommener Anpreßkräfte ist ausgeschlossen. Darüber hinaus wird dadurch eine definierte Verstellung eines Führungs- oder Andrückmittels ermöglicht. Diesem Zweck dient ein dritter Verstellmotor, der an dem seitlichen Ansatz festgelegt ist und zur Verstellung des länglichen Maschinenteils aktiviert werden kann. Er wirkt dabei zusammen mit einem an seine Abtriebswelle gekoppelten Zahnrad, Gewindeelement oder Schnecke, welche(s) in formschlüssigem Eingriff mit einer Zahnreihe oder einem Gewinde an dem länglichen Maschinenteil steht.

Vorzugsweise handelt es sich bei dem länglichen Maschinenbauteil um eine Art Gewindespindel, mit deren Außengewinde ein Element mit einem dazu komplementären Innengewinde eine in axialer Richtung formschlüssige Verbindung ausbilden kann, wobei das Innengewindeelement an einem Halteelement beweglich, insbesondere verdrehbar, gelagert ist.

Übliche Spindeltriebe basieren auf dem bekannten Schraubprinzip, wobei einer Relatiwerdrehung infolge der Gewindesteigung eine dazu proportionale Relatiwerschiebung in Längsrichtung des Schraubgewindes überlagert ist. Eine definierte Relativverschiebung zweier nach Art eines Gewindes ineinandergreifender Elemente setzt demnach eine definierte Relatiwerdrehung dieser Elemente voraus. Aufgrund des physikalischen Prinzips "actio = reactio" muß aber ein Antrieb zur Erzeugung einer Drehung des einen Elements an dem jeweils anderen Element abgestützt sein. Da das mit einer Spindel kämmende Element sich dabei entlang der Spindel verschiebt, muß eine solche Abstützung wiederum eine Längsverschiebung tolerieren. Dies kann beispielsweise durch einen an der Spindel festgelegten, zu dieser parallelen Führungsstab erreicht werden, auf dem eine Art Reiter verfährt, welcher den Antriebsmotor drehfest abstützt. Eine solche Konstruktion ist einerseits relativ aufwendig und damit teuer und platzraubend; aufgrund des erforderlichen Abstandes zwischen Spindel und Führungsstab besteht andererseits die Gefahr von Verkantungen od. dgl. oder es muß eine aufwendige Schmierung der Spindel und des Führungsstabs vorgesehen werden.

Bei der gattungsgemäßen Vorrichtung wird dagegen eine Gewindespindel verwendet, die an ihrem Mantel eine oder mehrere, langgestreckte Vertiefungen aufweist zusätzlich zu ihrem Außengewinde für den Eingriff in das beweglich gelagerte Innengewindeelement und mit einer anderen Steigung als jenes, worin ein oder mehrere Elemente des Halteelements zur Führung der Gewindespindel eingreifen.

Durch diese-zusätzlichen Einschnitte in den Spindelkörper kann eine Führung ansetzen, welche zwar eine definiert Verschiebung des Halteelements gegenüber der Gewindespindel zuläßt, jedoch keine zu der Bewegung des Innengewindeelements konforme Drehbewegung. An dieser Führung bzw. an dem Halteelement stützt sich sodann der Antriebsmotor ab, welcher andererseits das mit der Spindel kämmende Gewindeelement in Drehung versetzt. Bei festgehaltenem Drehwinkel der Spindel resultiert aus einer gleichzeitigen Drehung des damit kämmenden Innengewindeelements eine definierte Relativverdrehung, die von der Gewindesteigung(sdifferenz) in eine definierte Vorschubbewegung umgesetzt wird, ohne dass dazu ein Führungsstab od. dgl. erforderlich wäre.

Es hat sich als günstig erwiesen, dass die Steigung der zusätzlichen Führungsvertiefung(en) der Gewindespindel größer ist als die Steigung des Außengewindes zum Eingriff mit dem beweglich gelagerten Innengewindeelement. Demzufolge ist bei einem Drehantrieb des Innengewindeelements dessen Rotation stärker als die Rotation des Halteelements, das - wie auch die Spindel - an einem Maschinen- oder Anlagenteil oder -chassis oder an einem Fundament festgelegt ist.

Im Idealfall verläuft (verlaufen) die zusätzlichen Führungsvertiefung(en) der Gewindespindel (etwa) in deren Längsrichtung, so dass das Halteelement keine Relatiwerdrehung gegenüber der Gewindespindel ausführt. Deshalb können die Spindel einerseits und das Halteelement andererseits an zwei Maschinen- oder Anlagenteilen fixiert werden, welche während des Betriebs keiner Relativverdrehung unterliegen.

Weitere Vorzüge ergeben sich dadurch, dass wenigstens eine zusätzliche Führungsvertiefung der Gewindespindel wenigstens eine nicht tangential, sondern etwa radial bezüglich der Spindelachse, d.h., eine in Längsrichtung derselben, orientierte Führungsfläche aufweist. Diese Führungsfläche kann daher ähnlich einer Wetterfahne verwendet werden, um die Drehwinkelstellung der Gewindespindel relativ zu dem Halteelement zu beeinflussen bzw. vorzugeben.

Dieser Erfindungsgedanke läßt sich dahingehend weiterbilden, dass wenigstens ein Paar von zueinander etwa parallelen Führungsflächen vorgesehen ist. Mit zwei unterschiedlichen Drehrichtungen zugewandten Führungsflächen läßt sich die Drehwinkelstellung der Gewindespindel relativ zu dem Halteelement exakt vorbestimmen und gegenüber beiden Drehrichtungen stabilisieren.

Vorzugsweise sind mehrere, zueinander etwa parallel verlaufende zusätzliche Führungsvertiefungen vorgesehen, die in gleichen Abständen nebeneinander verlaufen, so dass die Gewindespindel einen kreuz- oder sternförmigen Querschnitt aufweist. Dadurch ergeben sich symmetrische Kräfteverhältnisse, was einem unerwünschten Verklemmen oder Verkanten der Gewindespindel entgegenwirkt.

Wenigstens eine zusätzliche Führungsvertiefung der Gewindespindel kann einen etwa kerbenförmigen Nutgrund aufweisen, insbesondere mit einem etwa rechtwinkligen Querschnitt. Ein solcher Querschnitt korrespondiert mit wenigstens einer Führungsrolle, die in wenigstens eine zusätzliche Führungsvertiefung der Gewindespindel eine Führungsrolle eingreift. Solche Führungsrollen, wovon es bevorzugt mehrere gibt, dienen der leichtgängigen Lagerung der Gewindespindel.

Um durch die erfindungsgemäße, zusätzliche Führungseinrichtung eine Relativbewegung in Richtung der Spindelachse sicherzustellen, sollten die Drehachse(n) der Führungsrolle(n) innerhalb einer von der Spindelachse lotrecht durchsetzten Ebene liegt (-en).

Eine Verkantung der Gewindespindel kann zuverlässig vermieden werden, indem die Führungsrollen in zwei oder mehr von der Spindelachse etwa lotrecht durchsetzten Ebenen angeordnet sind.

Um die Gewindespindel punktgenau zu lagern, sollten überdies zwei oder mehr Führungsrollen innerhalb einer von der Spindelachse lotrecht durchsetzten Ebene angeordnet sein. Besonders eignet sich eine Kombination von wenigstens drei Führungsrollen pro Ebene.

Die Erfindung empfiehlt, ein oder mehrere Führungsrollen an der Halterung bzw. an dem Halteelement zu lagern, um eine unerwünschte Relativbewegung zwischen dieser und der Gewindespindel auszuschließen.

Eine besonders leichtgängige Verschiebbarkeit erfährt die Gewindespindel durch eine Kugellagerung der Führungsrollen.

Um eine gegenseitige Beeinträchtigung zu vermeiden, sollte die Führungseinrichtung, insbesondere die Führungsrollen, gegenüber dem mit der Gewindespindel kämmenden Innengewindeelement in axialer Richtung versetzt sein.

Sofern das Innengewindeelement ringförmig geschlossen ist, kann dessen Innengewinde die Gewindespindel vollständig und lückenlos umgreifen. Dies hat den Vorteil, dass die von den zusätzlichen Führungsvertiefungen unterbrochenen Abschnitte des Außengewindes sich beständig in Eingriff mit dem Innengewindeelement befinden und daher stets eine optimale Führung erfahren.

Die Lagerung des Innengewindeelements an dem Halteelement sollte derart beschaffen sein, dass keine Relativbewegung in Längsrichtung der Gewindespindel möglich ist. Dann ist die Relativverschiebung der Gewindespindel gegenüber dem Halteelement exakt proportional zu der Relativverdrehung zwischen letzterem und dem Innengewindeelement.

Es liegt im Rahmen der Erfindung, dass das mit der Gewindespindel kämmende Innengewindeelement in der Halterung drehgelagert ist. Eine solche reine Drehlagerung vermeidet in gewünschter Weise jegliche Verschiebung zwischen diesen Elementen in Längsrichtung der Spindel.

Die erfindungsgemäße Konstruktion läßt sich weiter dadurch optimieren, dass die Lagerung für das mit der Gewindespindel kämmende Innengewindeelement ein oder vorzugsweise zwei Wälzlager, insbesondere Kugellager, aufweist. Solchenfalls ist keine Haftreibung zu überwinden, und demnach sind auch kleinste Relativbewegungen möglich, was eine hochpräzise Verstellung ermöglicht.

Das mit der Gewindespindel kämmende Innengewindeelement kann mit einer Außenverzahnung versehen sein, um durch einen formschlüssigen Eingriff in diese Verzahnung die Relatiwerdrehung zwischen Innengewindeelement und Halteelement exakt vorgeben zu können. Hierfür eignet sich besonders ein Zahnrad, insbesondere Ritzel, und/oder eine Schnecke, welche(s) von einem Motor angetrieben ist und in drehfestem Eingriff mit der Außenverzahnung des Innengewindeelements steht.

Schließlich entspricht es der Lehre der Erfindung, dass an dem länglichen Maschinenteil (ein) rollenförmige(s) Zuführ- oder Anpreßmittel um eine Achse drehbar gelagert ist/sind, wobei sich die Lagerstelle in einem Endbereich des länglichen Maschinenteils befindet und die Drehachse vorzugsweise etwa lotrecht zu der Längsachse des länglichen Maschinenteils orientiert ist, obwohl auch eine axiale Orientierung der Drehachse möglich ist. Ein solches, rollenförmiges Zuführ-oder Anpreßmittel sitzt demnach ganz "vorne" an dem länglichen Maschinenteil, vorzugsweise seitlich gegenüber diesem versetzt. Eine gabelförmige Lagerung ist nicht erforderlich, aber möglich.

Weitere Merkmale, Eigenschaften, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

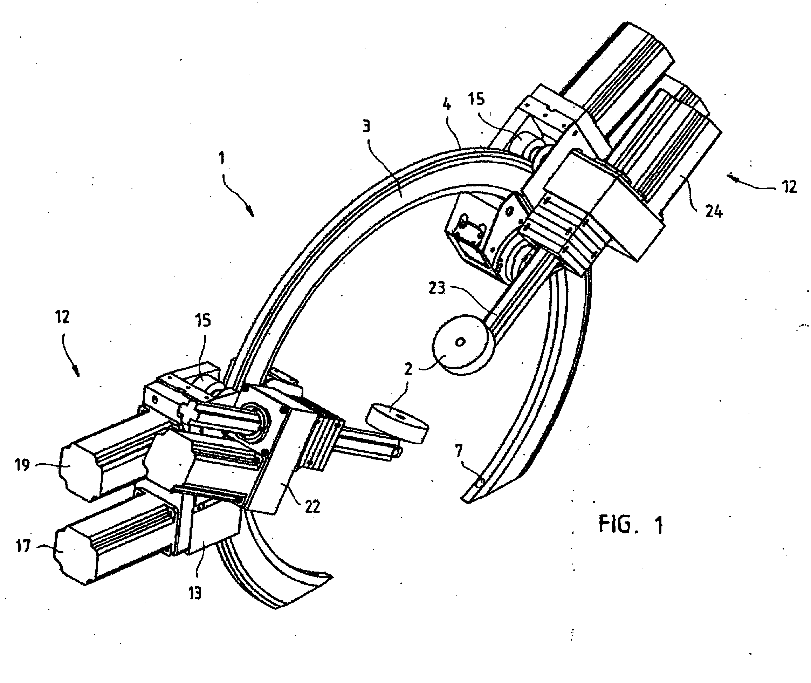

- Fig. 1: eine erfindungsgemäße Halterung für eine oder mehrere Führungs- oder Andrückrollen einer Kaschiermaschine zum Beschichten von Profilen in einer perspektivischen Darstellung;
- Fig. 2: eine Seitenansicht auf die Halterung aus Fig. 1, in Transportrichtung eines zu beschichtenden Profils betrachtet;

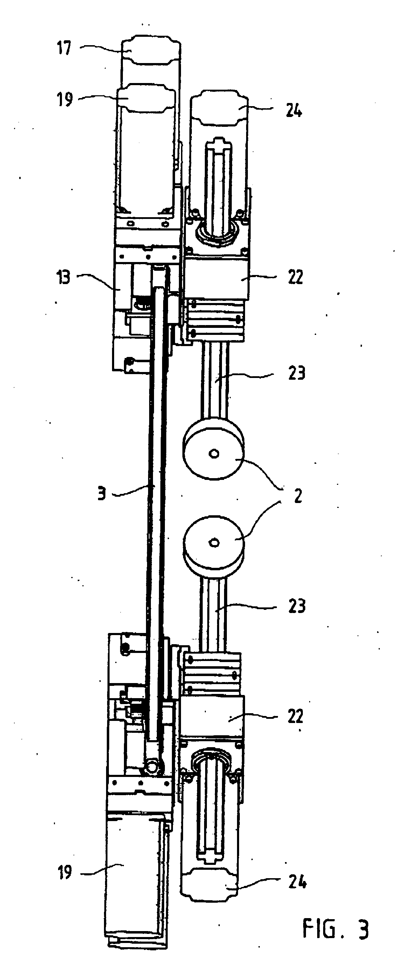

- Fig. 3: eine Draufsicht auf die Fig. 2 in Richtung des Pfeils III; sowie

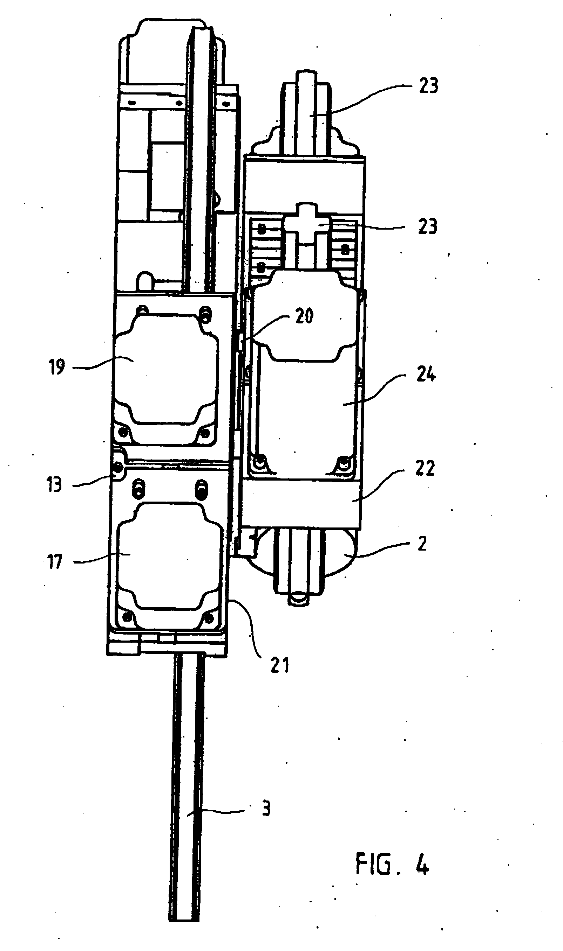

- Fig. 4: eine Ansicht auf die Fig. 2 in Richtung des Pfeils IV.
- Fig. 5: einen erfindungsgemäßen Spindeltrieb in einer isometrischen Darstellung bei einer ersten Verschiebestellung der Spindel,

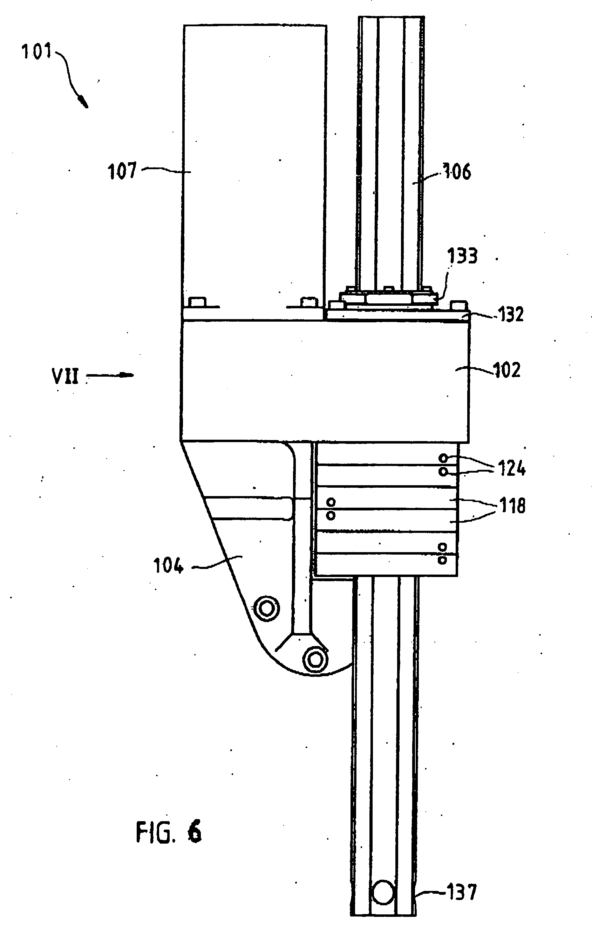

- Fig. 6: eine Seitenansicht auf die Fig. 5 in Richtung des Pfeils VI,

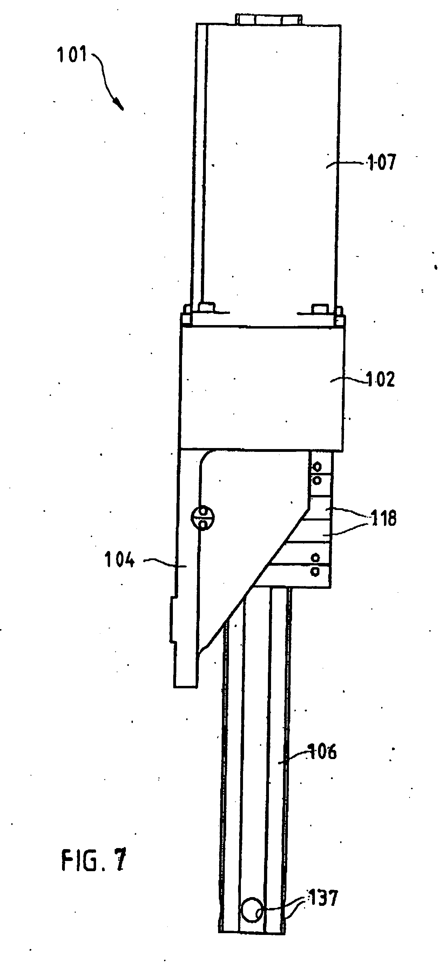

- Fig. 7: eine Seitenansicht auf die Fig. 2 in Richtung des Pfeils VII,
- Fig. 8: eine Draufsicht auf die Fig. 1 in Richtung des Pfeils VIII,

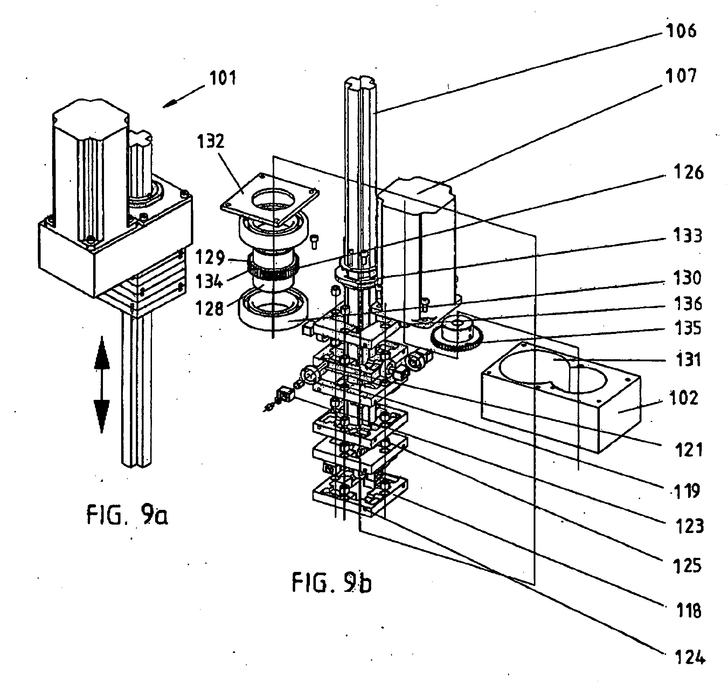

- Fig. 9a: den Spindeltrieb aus Fig. 5 bei einer zweiten Verschiebestellung der Spindel, sowie
- Fig. 9b: eine Sprengdarstellung mit den Komponenten des Spindeltriebs gemäß Fig. 9a.

In der Zeichnung ist eine Andrückrollenhalterung 1 für eine Maschine zum Kaschieren von Profilen mit Folie zu sehen. Dabei wird das zu kaschierende Profil auf einer Rollenbahn der Maschine transportiert, wobei seine Längsachse parallel zu seiner Transportrichtung orientiert ist. Die aufzukaschierende Folie wird von einer Vorratstrommel abgespult und läuft mit der selben Geschwindigkeit wie das Profil. Die Folie wird zunächst mittels mehrerer Führungsrollen an das Profil herangeführt und schließlich dort angepreßt. Diesen letzteren Vorgang übernehmen mehrere Andrückrollen 2, die an mehreren, in Transportrichtung des Profils hintereinander angeordneten Andrückrollenhalterungen 1 angeordnet sind, und zwar in völlig beliebigen, gegenseitigen Abständen, bspw. in der Größenordnung von etwa 10 bis 50 cm.

In der modernen Gesellschaft spielt eine hohe Anpassungsfähigkeit an unterschiedlichste Kundenwünsche eine immer wichtigere Rolle. Beim Kaschieren von Profilen treffen technisch bedingte Gesichtspunkte mit überwiegend oder rein ästhetisch begründeten Auswahlkriterien aufeinander. Das zu beschichtende Profil ist durch seinen technischen Zweck definiert, bspw. ein Fensterrahmen, Fußbodenleiste, Abdeckschiene, etc. Andererseits unterliegt die darauf zu applizierende Folie überwiegend dem ästhetischen Geschmack des Kunden. In vielen Fällen werden - bedingt durch die Vielzahl der unterschiedlichen Folien - jeweils nur kleine Stückzahlen nach dem selben Muster (Profil und Folie) hergestellt; anschließend muß die Maschine auf ein anderes Profil und/oder eine andere Folie umgerüstet werden. Hierbei ist die Umstellung auf eine andere Folie durch einen Austausch der betreffenden Folien-Vorratstrommel zu bewerkstelligen; demgegenüber erfordert die Umrüstung auf einen anderen Profilquerschnitt einen weitaus größeren Arbeitsaufwand, weil die Zuführungsrollen, insbesondere aber die meisten oder gar alle Andrückrollen 2 an den neuen Profilquerschnitt angepaßt werden müssen. Da die Einstellung der Andrückrollen 2 für ein gutes Arbeitsergebnis mit einer hohen Präzision erfolgen muß, ist eine Person mit dieser Aufgabe relativ lange beschäftigt, bspw. eine Stunde, währenddem die Maschine stillsteht. Wenn der anschließende Kaschiervorgang dann wiederum nur wenige Profile betrifft, so kann es bspw. passieren, dass die Rüstzeiten der Kaschiermaschine länger sind als die reine Produktionszeit, mithin die Maschine zu weniger als 50 % ausgenutzt wird. Aufgrund dieser Zusammenhänge schrecken viele Firmen davor zurück, Kleinaufträge anzunehmen, weil diese äußerst unwirtschaftlich sind. Bei kleinen Stückzahlen ist der Kunde daher häufig auf Standardprodukte angewiesen, die seinen ästhetischen Vorstellungen nicht oder nur in eingeschränktem Umfang entsprechen.

Hier schafft die Erfindung Abhilfe, indem die neuartige Andrückrollenhalterung 1 eine rasche Verstellung der Andrückrollen 2 erlaubt, mithin die Umrüstzeit auf ein Minimum reduziert und dadurch die Wirtschaftlichkeit einer Kaschiermaschine gerade bei Kleinstserien drastisch erhöht.

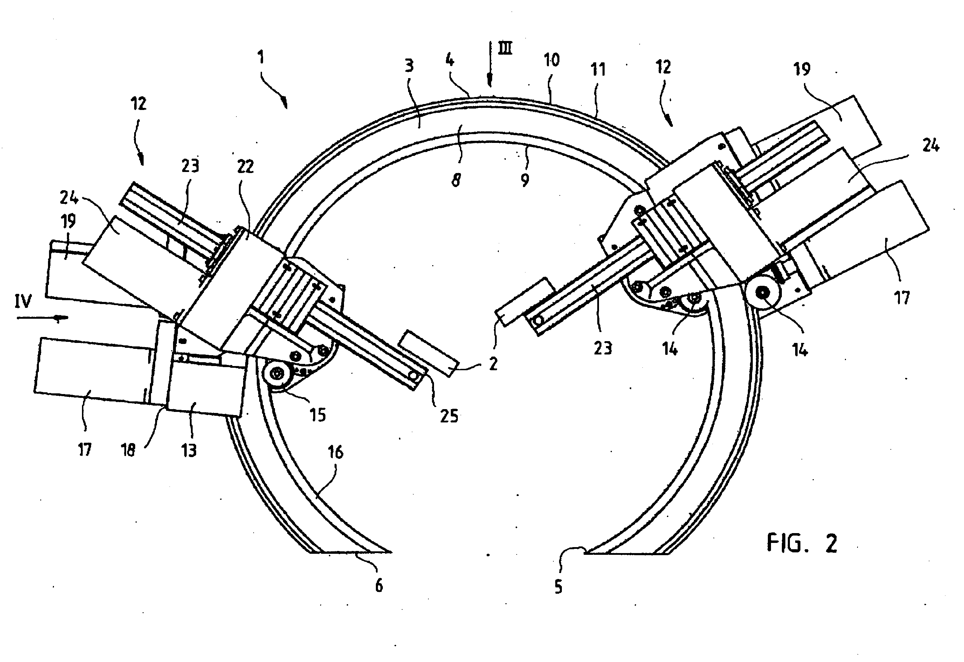

Hierzu verwendet die erfindungsgemäße Andrückrollenhalterung 1 einen ebenen, vorzugsweise ringförmigen Träger 3. Dieser könnte einem ovalen, elliptischen oder rechteckigen Verlauf folgen; wie in Fig. 2 gut zu erkennen, folgt er bei der dargestellten Ausführungsform jedoch dem Verlauf eines Kreises oder Kreissegmentes. Ein solches Kreissegment kann sich entlang eines beliebigen Zentrumswinkels erstrecken, im vorliegenden Fall bspw. etwa 270°. Es könnte sich allerdings auch um einen Vollkreis handeln. Der Durchmesser dieses Trägers 3 ist ebenfalls völlig beliebig; er könnte bspw. in der Größenordnung von 30 cm bis etwa 70 cm, bevorzugt bei etwa 50 cm liegen.

Diese Träger 3 werden aufrecht stehend montiert, derart, dass ihre Grundebene von der Transportrichtung eines Profils etwa lotrecht durchsetzt ist; sie können aber auch nach einer beliebigen Seite geneigt montiert werden. Dabei ist der Träger 3 an seiner Oberseite 4 geschlossen; wenn es sich nicht um einen Vollkreis handelt, könnte sich seine Öffnung 5 an der Oberseite oder auch seitlich befinden; bevorzugt würde solchenfalls jedoch die Unterseite 6. Dort sind Befestigungsmittel vorgesehen, bspw. Bohrungen 7, mit denen der Träger am Chassis der Rollenbahn der Kaschiermaschine befestigt werden kann, bspw. festgeschraubt. Zur Stabilisierung liegt der Träger 3 dabei bevorzugt an einer Referenzfläche des Maschinenchassis an, die zu seiner gewünschten Grundebene parallel ist, insbesondere lotrecht oder schräg zu der Transportrichtung. Dabei befindet sich das Zentrum des Trägers 3 (der Mittelpunkt der Kreisbahn) bevorzugt im Bereich des zu kaschierenden Profils, also knapp oberhalb der Rollenbahn. Allerdings ist diese Lage des Mittelpunktes nicht zwingend erforderlich.

Der Träger 3 hat in der dargestellten Ausführung eine eher scheibenförmige Gestalt, d.h., seine Dicke in Richtung der Transportrichtung ist deutlich kleiner als seine radiale Erstreckung; er ist also sehr schmal, aber dennoch in hohem Maße steif und schwingungsarm. Die konkrete Ausführungsform kann jedoch in Art und Ausmaß variieren.

Bei der dargestellten Ausführungsform hat der Träger 3 eine etwa rechteckige Grundgestalt, ist aber im Bereich seiner Kanten angefast, so dass sich ein etwa achteckiges Profil ergibt. Die abgeschrägten Seiten können mit den Flachseiten 8 einen Winkel zwischen 0° und 90° einschließen, verlaufen aber vorzugsweise eher parallel zu den ebenen Flachseiten 8 denn zu den radial innen oder außen liegenden, gekrümmten Seiten 9, 10. Ferner ist der Außenumfang 10 mit einer Verzahnung 11 versehen ähnlich einem Zahnkranz. Diese Verzahnung könnte sich allerdings auch an einer Flachseite 8 oder an dem Innenumfang 9 befinden.

Der Ring 3 trägt ein oder mehrere, im-vorliegenden Beispiel zwei daran entlang verstellbare Andrückeinrichtungen 12 mit je einer oder mehreren Andrückrolle(n) 2.

Jede Andrückeinrichtung 12 verfügt über ein Chassis 13, weiches den Träger 3 ganz oder teilweise umgreift, zumindest jedoch von dessen Innenumfang 9 bis zu seinem Außenumfang 10. Jenseits dieser beiden Randlinien 9, 10 sind an dem Chassis 13 wenigstens je zwei Drehachsen 14 gelagert, welche parallel zu der Transportrichtung orientiert sind und wenigstens je zwei Führungsrollen oder - räder 15 tragen, deren einander zugewandte Stirnseiten komplementär zu je einer abgeschrägten Spur 16 des Trägers 3 profiliert sind. Indem die Führungsrollen 15 an den Spuren 16 abrollen, wird das Chassis 13 entlang des Trägers 3 verfahren.

Zum Antrieb ist an dem Chassis 13 eine Schnecke vorgesehen, die mit einem Antriebsmotor 17 drehfest gekoppelt ist und mit der Verzahnung 11 kämmt, unabhängig davon, ob letztere sich an dem Innen- oder Außenumfang 9, 10 oder an einer Flachseite 8 des Trägers 3 befindet. Ein Schneckengetriebe kann mit einfachen baulichen Maßnahmen (Dimensionierung bzw. Wahl der Schneckengeometrie) selbsthemmend ausgebildet werden. Die Kopplung umfaßt außerdem bevorzugt ein stark untersetzendes und damit selbsthemmendes Getriebe, das ggf. mit dem Motor integriert sein kann. Diese Maßnahmen haben zur Folge, dass das Chassis 13 eine einmal angefahrene Position - auch unter starker Belastung - zuverlässig beibehält, so dass eine zusätzliche Bremse entfallen kann.

Der Motor 17 befindet sich vorzugsweise an der radial außen liegenden Seite 18 des Chassis 13.

Neben dem Motor 17 ist ein zweiter Motor 19 vorgesehen. Dessen Abtriebsachse ist - ebenfalls über ein stark untersetzendes und damit hinsichtlich einer angreifenden Last selbsthemmendes Getriebe - drehfest mit einer Achse 20 gekoppelt, die an einer Flachseite 21 aus dem Chassis 13 austritt und ebenfalls parallel zu der Transportrichtung eines Profils orientiert ist. Diese Achse 20 ist starr mit einem Ansatz 22 verbunden und dient dazu, diesen Ansatz 22 gegenüber dem Chassis 13 gezielt zu verschwenken, gemäß der Ansteuerung des zweiten Motors 19. Vorzugsweise ist an der Abtriebsachse des zweiten Motors 19 ein Umlenkgetriebe vorgesehen, bspw. in Form zweier miteinander kämmender, verzahnter Kegelräder. An/mit der Achse des abtriebsseitigen Kegelrades ist eine Schnecke angeordnet/gekoppelt, die mit einem Zahnrad oder einer rundumlaufenden Verzahnung an der Achse 20 kämmt. Ein Schneckengetriebe kann mit wenig Aufwand selbsthemmend ausgestaltet werden, so dass eine eigene Bremse entfallen kann und die Achse 20 beim Stillsetzen des Motors 19 stets in der eingestellten Position verharrt.

An dem Chassis-Ansatz 22 befindet sich eine Führungseinrichtung 105 für ein längliches Maschinenbauteil 23 sowie eine Antriebseinrichtung 24 mit einem dritten Motor 107 zur Verschiebung des länglichen Maschinenbauteils 23 in dessen Längsrichtung. Auch hier kann die Kopplung zwischen dem Motor 107 und einem das längliche Maschinenbauteil 23 bewegenden Element ein untersetzendes und damit gegenüber einer drückenden Last selbsthemmendes Getriebe umfassen.

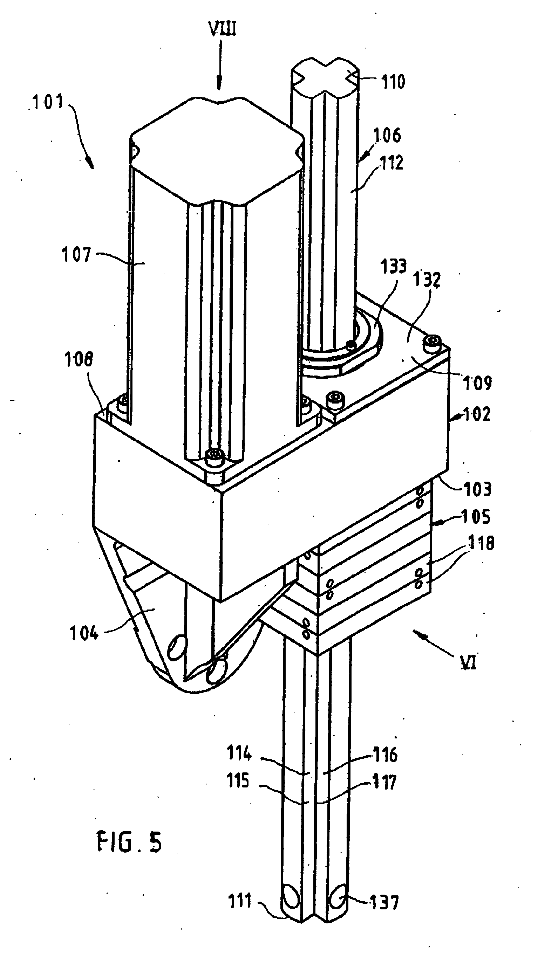

Vorzugsweise ist der Chassis-Ansitz 22 als Spindeltrieb 101 ausgebildet, wie er in Fig. 5 dargestellt ist. Er umfaßt ein Gehäuse 102, an dessen Unterseite 103 sich eine Befestigungslasche 104 einerseits sowie eine Führungseinrichtung 105 für die eigentliche Gewindespindel 106 andererseits befindet. Die Verstellung der Gewindespindel 106 leistet ein Antriebsmotor 107, der an der Oberseite 108 des Gehäuses 102 angeflanscht ist und über ein Getriebe 109 mit der Gewindespindel 106 gekoppelt ist.

Die markanteste Besonderheit des erfindungsgemäßen Spindeltriebs 101 ist die Gestalt der Gewindespindel 106. Diese ist aus einem langgestreckten Profil gearbeitet, insbesondere aus einem Rundstahl mit zwei Stirnseiten 110, 111 und einer dieselben miteinander verbindenden Mantelfläche 112. Die gesamte Mantelfläche 112 trägt ein Gewinde 113 mit einer konstanten Steigung. Im Gegensatz zu bekannten Spindeln ist die erfindungsgemäße Gewindespindel 106 jedoch zusätzlich auf ihrer gesamten Längserstreckung mit parallel zu ihrer Längsachse laufenden Einkerbungen 114 konstanten Querschnitts versehen.

Bei der dargestellten Ausführungsform gibt es vier Einkerbungen 114. Jede Einkerbung 114 hat den selben Querschnitt, bestehend aus zwei ebenen Flächen 115, 116, die sich am Grund 117 der Einkerbung 114 unter einem rechten Winkel treffen. Da die beiden Flächen 115, 116 einer Einkerbung 114 jeweils spiegelsymmetrisch zu einer gemeinsamen Längsmittelebene des Spindelgrundkörpers 106 liegen und alle Einkerbungen 114 überdies in gleichen Abständen über den Umfang 112 des Spindelgrundkörpers 106 verteilt sind, erhält der eingekerbte Spindelgrundkörper 106 einen kreuzförmigen Querschnitt. Dabei sind die Einkerbungen 114 tiefer als das Gewinde 113, so dass die Flächen 115, 116 glatt sind.

Ihre Führung gegenüber dem Gehäuse 102 erhält die Gewindespindel 106 durch die lamellenartig aufgebaute Führungseinrichtung 105. Diese besteht aus sechs Scheiben 118, von denen jeweils zwei als sich gegenseitig ergänzende Lager-Halbschalen aufgebaut sind, zwischen denen jeweils ein oder mehrere Führungsrollen 119 gelagert ist/sind. Dadurch ergeben sich insgesamt drei Lagerebenen, im vorliegenden Beispiel mit jeweils vier Führungsrollen 119 pro Ebene.

Die Führungsrollen 119 einer Ebene sind so ausgerichtet, dass ihre Mantelflächen 120 jeweils auf einer Fläche 115, 116 einer Einkerbung 114 abrollen. Dies wird dadurch erreicht, dass die Dreh- bzw. Lagerachsen 121 der Führungsrollen jeweils parallel zu der Ebene der Scheiben 118 ausgerichtet sind sowie jeweils parallel zu der betreffenden Fläche 115, 116 einer Einkerbung 114.

Da der Radius einer Führungsrolle 119 größer ist als die Breite einer Fläche 115, 116 einer Einkerbung 114, laufen die Dreh- bzw. Lagerachsen 121 außen an der Mantelfläche 112 der Gewindespindel vorbei. Da die Führungsflächen 115, 116 exzentrisch zu der Spindellängsachse 122 liegen, hat jede Dreh- bzw. Lagerachse 121 ein näher bei der Gewindespindel 106 liegendes Ende sowie ein davon weiter entferntes Ende. Während das der Gewindespindel 106 jeweils nähere Ende nach Art eines Gleitlagers in einer sich jeweils hälftig auf die beiden Halbschalen 118 aufteilenden Sacklochbohrung gelagert ist, kann für das äußere Ende ein Lagerstein 123 vorgesehen sein, der in die betreffenden Halbschalen 118 eingelegt wird und eine Einstellmöglichkeit bietet, bspw. mittels eines Gewindestiftes 124.

Jede Halbschale 118 weist mehrere, vorzugsweise vier lotrecht zu der betreffenden Grundebene gerichtete Ausnehmungen auf, in die je eine Buchse 125 eingesetzt ist. Mittels dieser Buchsen 125 durchgreifender Schrauben werden die einzelnen Lager-Halbschalen 118 exakt übereinander ausgerichtet und sodann als gemeinsames Paket an der Unterseite 103 des Gehäuses 102 festgeschraubt.

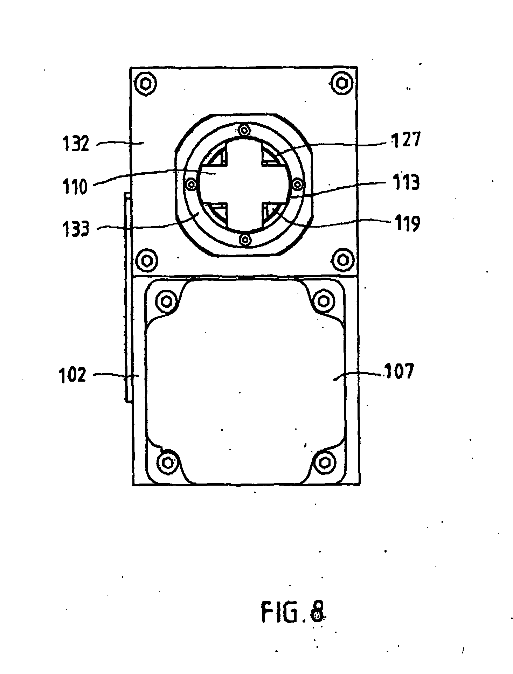

Die Lager für die Führungsrollen 119 in der obersten und untersten Lagerebene sind identisch zueinander ausgerichtet; wie Fig. 8 erkennen läßt, drücken sie jeweils auf die im Uhrzeigersinn hintere Führungsfläche 116 einer Einkerbung 114. Die Lager der Führungsrollen 119 in der mittleren Lagerebene sind dagegen spiegelbildlich dazu aufgebaut; sie drücken gemäß Fig. 8 jeweils auf die im Uhrzeigersinn vorne liegende Führungsfläche 115 einer Einkerbung 114. Somit kann die Gewindespindel 106 aufgrund des solchermaßen entstandenen Formschlusses sich gegenüber dem Gehäuse 102 nicht verdrehen, im Idealfall sogar ohne jedes Spiel. Eine Relativverschiebung in Längsrichtung 122 der Gewindespindel 106 ist dagegen ohne weiteres möglich, weil dazu nur die geringe Rollreibung der Führungsrollen 119 zu überwinden ist.

Eine definierte Längsverstellung erfährt die Gewindespindel 106 durch das mit dem Antriebsmotor 107 gekoppelte Getriebe 109. Kernstück dieses Getriebes 109 ist ein die Gewindespindel 106 umgreifender Ring 126 mit einem Innengewinde 127, das komplementär zu dem Außengewinde 113 auf der (durch die Einkerbungen 114 unterbrochenen) Mantelfläche 112 der Gewindespindel 106 ist. Dieser Ring 126 ist daher - trotz der Einkerbungen 114 - entlang der Gewindespindel 106 schraubverstellbar ähnlich wie eine Mutter auf einer Maschinenschraube. Um ein evtl. noch verbleibendes axiales Spiel zu kompensieren, ist eine Einstellmutter 133 mit identischer Gewindesteigung vorgesehen, die azimutal verdrehbar und in weitgehend beliebigen Positionen arretierbar ist.

Der Außenumfang des Rings 126 gliedert sich in drei Bereiche, nämlich zwei stirnseitige Abschnitte 128 und einen mittleren Abschnitt 129. Die beiden, querschnittlich etwas verjüngten, stirnseitigen Abschnitte 128 sind mit je einem Kugellager 130 in einer hohlzylindrischen Ausnehmung 131 des Chassis/Gehäuses 102 gelagert, so dass der Innengewindering 126 keine axiale Verschiebung gegenüber dem Chassis/Gehäuse 102 ausführen kann, wohl aber eine Drehbewegung. Vorzugsweise wird dies Ausnehmung 131 des Chassis/Gehäuses 102 nach Einsetzen der Einheit aus Ring 126 und Kugellagern 130 mit einer an dem Gehäuse 102 anschraubbaren Abdeckplatte 132 verschlossen und abgedichtet.

Um eine solche Drehbewegung vorgeben zu können, ist der dritte, stufig gegenüber den stimseitigen Abschnitten 128 abgesetzte und dabei nach radial außen erweiterte Mittelabschnitt 129 der Ring-Außenseite 126 mit einer rundumlaufenden Verzahnung 134 versehen. Mit dieser Verzahnung 130 kämmt ein Zahnrad 135, das auf der Abtriebsachse 136 des Antriebsmotors 107 festgelegt ist.

Durch Antrieb des Motors 107 wird demnach der Gewindering 126 in eine Drehbewegung versetzt und schraubt sich dabei an der Gewindespindel 106 entlang. Da diese - bedingt durch die Führungseinrichtung 105 - einerseits einer solchen Drehbewegung nicht folgen kann und andererseits der Gewindering 126 - bedingt durch die in axialer Richtung fixierte Lagerung 129 - keinerlei Längsverschiebung mächtig ist, wird die Gewindespindel 106 gezwungen, eine der Schraubgeschwindigkeit bzw. der Drehgeschwindigkeit des Antriebsmotors 107 proportionale Linearbewegung gegenüber dem Chassis/Gehäuse 102 auszuführen. Wenn als Antriebsmotor 107 daher ein Schrittmotor verwendet wird, läßt sich jedem Schritt eine definierte Linearverschiebung der Gewindespindel 106 zuordnen, und man erhält mit wenig Steueraufwand eine präzise arbeitende Stellvorrichtung. Ähnliches läßt sich auch erreichen, wenn ein Antriebsmotor 107 mit angebautem Lagegeber, bspw. Inkrementalgeber, verwendet wird.

Im Bereich eines oder beider Enden 110, 111 kann die Gewindespindel 106 mit einem Element zum Anschluß eines Maschinenbauteils vorgesehen sein, bspw. eine oder mehrere Querbohrungen 137 zum Hindurchstecken einer Achse.

Am vorderen, d.h. radial innen liegenden Ende 111 der Gewindespindel 106 ist/sind die eigentliche(n) Andrückrolle(n) 2 gelagert, drehbar um eine sowohl gegenüber der Gewindespindel 106 als auch gegenüber der Transportrichtung lotrecht orientierte Rollendrehachse.

Die Wirkungsweise der Andrückrollenhalterung 1 ist wie folgt:

Durch Ansteuerung des ersten Motors 17 wird die betreffende Andrückeinrichtung 12 entlang des Trägers 3 verfahren und dadurch der Neigungswinkel der Rollenachsen 2 verstellt sowie gleichzeitig derjenige Oberflächenbereich eines Profils ausgewählt, wo die Andrückkraft aufgebracht werden soll.

Durch Ansteuerung des zweiten Motors 19 wird der Ansatz 22 gegenüber dem Chassis 13 verschwenkt. Dadurch kann/können bei Bedarf die Andrückrolle(n) 2 aus einer etwa radial auf die Außenseite eines Profils pressenden Stellung in eine evtl. eher tangentiale Ausrichtung verstellt werden entsprechend der Querschnittsgeometrie des zu kaschierenden Profils.

Durch Ansteuerung des dritten Motors 107 kann der Abstand der Andrückrolle(n) 2 von dem Träger 3 verstellt werden entsprechend den Querschnifisabmessungen des zu kaschierenden Profils, insbesondere entsprechend seines Durchmessers.

Durch Zusammenwirken aller drei Ansteuermechanismen 17, 19, 24 kann die betreffende Andrückrolle(n) 2 nicht nur an jedem Punkt im Inneren des Trägers 3 plaziert werden, sondern außerdem auch in nahezu jeder beliebigen Ausrichtung, wobei nur der Winkel der Rollendrehachse 2 gegenüber der Ebene des Trägers 3 stets konstant bleibt.

Die Motoren 17, 19, 107 können mit Lagegebem ausgerüstet sein, so dass vorgegebene Positionen präzise angefahren und eingestellt werden können, entsprechend den besonderen Gegebenheiten eines bestimmten Profils. Diese Sollpositionen können für jedes Profil abgespeichert werden; soll dann zu einem späteren Zeitpunkt wieder auf dieses Profil umgerüstet werden, muß die Steuerung mittels der Motoren 17, 19, 107 nur die betreffenden Sollpositionen anfahren, und schon kann das Profil eingelegt und beschichtet werden. Die Umrüstzeit ist damit extrem kurz und beträgt höchstens wenige Minuten; die betreffende Kaschiermaschine arbeitet auch bei Kleinstserien wirtschaftlich.

Ggf. können für alle Motoren 17, 19, 107 jeweils dieselben Typen verwendet werden. Vorzugsweise zeichnen sich diese Motoren aus durch eine Reihe von integrierten Komponenten, bspw. ein integriertes Getriebe, vorzugsweise ein Stirnradgetriebe, eine integrierte Leistungselektronik, eine integrierte Positionierelektronik, einen integrierten Lagegeber und/oder eine integrierte Busanschaltung. Es handelt sich somit um Komponenten mit dezentralisierter Intelligenz, so dass der externe Steuerungsaufwand entweder reduziert werden oder ganz entfallen kann. Aufgrund eines hohen Selbsthaltemomentes kann auch eine Bremse entfallen. Für die Kommunikation und Updates ist eine CAN-Bus-Schnittstelle vorgesehen. Die Motoren sind abgeschirmt gegenüber elektromagnetischen Feldern und damit störsicher. Die Lebensdauer des Stirnradgetriebes wird erhöht durch Nadellager. Als Nennspannung des Gleichstrommotors hat sich eine Niederspannung bewährt, vorzugsweise zwischen 10 V und 30 V, insbesondere bei 24 V, die Nennleistung kann zwischen 40 W und 100 W liegen, vorzugsweise bei etwa 60 W. Sofern die Nenndrehzahl bei etwa 200 Ulmin. liegt, bspw. bei 210 U/min., sollte das Getriebe für eine Untersetzung zwischen 10 1 und 30 : 1 ausgelegt sein, bspw. zwischen 15 : 1 und 25 : 1, insbesondere von etwa 160 : 9. Das Selbsthaltemoment sollte größer sein als 0,1 Nm, vorzugsweise größer als 0,2 Nm, insbesondere größer als 0,5 Nm, beispielsweise etwa 0,7 Nm. Eine Positionierungsauflösung von etwa 1,5°, ggf. auch 1,667°, ist ausreichend. Das Verdrehflankenspiel sollte gleich oder kleiner sein als 1°.

## Patentansprüche

1. Maschine zum Ummanteln oder Beschichten von Profilen mit Folie, mit einem oder mehreren Mitteln zum Heranführen und/oder Anpressen der Folie an das betreffende Profil, bspw. Zuführ- oder Anpreßrollen (2), - bürsten oder -rakel, wobei wenigstens ein Zuführ- oder Anpreßmittel (2) an einem Träger (3) mit einer Führungsbahn angeordnet und entlang dieser Führungsbahn verstellbar ist mittels eines daran verfahrbaren Chassis (13) einer Verstellmechanik (12), an welchem ein Verstellmotor (17) festgelegt ist, **dadurch gekennzeichnet, dass** die Drehbewegung des Verstellmotors (17) in eine dazu proportionale Verschiebung des Halterungschassis (13) übersetzt ist.

2. Maschine nach Anspruch 1, **gekennzeichnet durch** folgende Merkmale:
a) der Verstellmotor (17) ist drehfest mit einem oder mehreren Antriebsrädern oder -rollen (15) gekoppelt, das/die an (je) einer Seite (8-10) oder Spur (16) des Führungsbahn-Trägers (3) entlangrollt (-en) und/oder mit einer dortigen Verzahnung (11) kämmt,
b) der Verstellmotor (17) und/oder dessen Koppeleinrichtung mit den Antriebsrädern oder -rollen (15) ist selbsthemmend ausgebildet.

3. Maschine nach Anspruch 1 oder 2, **dadurch gekennzeichnet, dass** wenigstens ein Träger (3) mit einer Führungsbahn für ein Zuführ- oder Anpreßmittel (2) und/oder dessen Führungsbahn entlang einer Kreisbahn verläuft.

4. Maschine nach einem der vorhergehenden Ansprüche, **dadurch gekennzeichnet, dass** wenigstens ein Träger (3) mit einer Führungsbahn für ein Zuführ- oder Anpreßmittel (2) aus einem Ring(segment) von gleichbleibendem, ursprünglich etwa rechteckigem Querschnitt gearbeitet ist.

5. Maschine nach Anspruch 4, **dadurch gekennzeichnet, dass** die längere Querschnittsachse des Ring(segments) mit etwa rechteckigem Querschnitt radial bezüglich des Mittelpunkts des Trägers (3) verläuft.

6. Maschine nach einem der Ansprüche 4 oder 5, **dadurch gekennzeichnet, dass** im Bereich einer oder mehrerer Kanten des Ring(segments) die dort aneinandergrenzenden Oberflächen sich unter einem beliebigen Winkel, bspw. von 90° oder mehr treffen, so dass sich ggf. abgeschrägte Spuren 16 ergeben.

7. Maschine nach einem der vorhergehenden Ansprüche, **dadurch gekennzeichnet, dass** wenigstens eine Seite (8-10) des Trägers (3) mit einer Zahnreihe (91) versehen ist, die vorzugsweise durch Bearbeitung des Träger-Grundkörpers (3) hergestellt ist.

8. Maschine nach einem der vorhergehenden Ansprüche, **dadurch gekennzeichnet, dass** das Chassis (13) wenigstens einen Träger (3) mit einer Führungsbahn für ein Zuführ- oder Anpreßmittel (2) ganz oder teilweise umgreift.

9. Maschine nach einem der vorhergehenden Ansprüche, **dadurch gekennzeichnet, dass** wenigstens zwei an dem Chassis (13) gelagerte Antriebsräder oder -rollen (15) an einander etwa diametral gegenüberliegenden Umfangsbereichen (8-10,16) wenigstens eines Trägers (3) mit einer Führungsbahn für ein Zuführ- oder Anpreßmittel (2) entlangrollen.

10. Maschine nach einem der vorhergehenden Ansprüche, **dadurch gekennzeichnet, dass** der Verstellmotor (17) über ein untersetzendes und/oder selbsthemmendes Getriebe mit den Antriebsrädern oder -rollen (15) gekoppelt ist, bspw. über eine Schnecke.

11. Maschine nach einem der vorhergehenden Ansprüche, **dadurch gekennzeichnet, dass** der Verstellmotor (17) direkt oder indirekt mit einem Lagegeber gekoppelt ist.

12. Maschine nach einem der vorhergehenden Ansprüche, **dadurch gekennzeichnet, dass** an dem wenigstens einen Träger (3) mit einer Führungsbahn für ein Zuführ- oder Anpreßmittel (2) umgreifenden Chassis (13) ein zweiter Verstellmotor (19) angeordnet ist, dessen Antriebsachse drehfest mit einer seitlich (Seite 21) aus dem Chassis (13) austretenden, zu der Transportrichtung eines zu beschichtenden Profils etwa parallelen Verstellachse (20), insbesondere für einen daran festgelegten Ansatz (22), gekoppelt ist.

13. Maschine nach Anspruch 12, **dadurch gekennzeichnet, dass** der zweite Verstellmotor (19) und/oder dessen Koppelung mit der seitlich (Seite 21) aus dem Chassis (13) austretenden Verstellachse (20) selbsthemmend ausgebildet ist.

14. Maschine nach Anspruch 12 oder 13, **dadurch gekennzeichnet, dass** an einem in Transportrichtung eines zu beschichtenden Profils gegenüber der Ebene wenigstens eines Trägers (3) mit einer Führungsbahn für ein Zuführ- oder Anpreßmittel (2) versetzten Ansatz (22) eines entlang des Trägers (3) verstellbaren Chassis (13) eine Führung für ein längliches, das eigentliche Führungs- oder Anpreßmittel (2) tragendes Maschinenteil (23) vorgesehen ist.

15. Maschine nach Anspruch 14, **dadurch gekennzeichnet, dass** die Längsachse des länglichen Maschinenteils (23) etwa parallel zu der Ebene wenigstens eines Trägers (3) mit einer Führungsbahn für ein Zuführ- oder Anpreßmittel (2) orientiert ist.

16. Maschine nach einem der Ansprüche 14 bis 15, **dadurch gekennzeichnet, dass** das längliche Maschinenteil (23) als Gewindespindel (106) ausgebildet ist, mit deren Außengewinde (113) ein Element (126) mit einem dazu komplementären Innengewinde (127) eine in axialer Richtung formschlüssige Verbindung ausbildet, wobei das Innengewindeelement (126) an einem Halteelement (102) beweglich, insbesondere verdrehbar, gelagert ist.

17. Maschine nach Anspruch 16, **dadurch gekennzeichnet, dass** die Gewindespindel (106) an ihrem Mantel (112) eine oder mehrere, langgestreckte Vertiefungen (114) aufweist zusätzlich zu ihrem Außengewinde (113) für den Eingriff in das beweglich gelagerte Innengewindeelement (126) und mit einer anderen Steigung als jenes Außengewinde (113), worin ein oder mehrere Elemente (119) des Halteelements 102) zur Führung der Gewindespindel (106) eingreifen.

18. Maschine nach Anspruch 17, **dadurch gekennzeichnet, dass** die zusätzliche Führungsvertiefung(en) (114) der Gewindespindel (106) (etwa) in deren Längsrichtung (122) verläuft (verlaufen).

19. Maschine nach einem der Ansprüche 17 oder 18, **dadurch gekennzeichnet, dass** die Gewindespindel (106) einen kreuz- oder sternförmigen Querschnitt aufweist.

20. Maschine nach einem der Ansprüche 17 bis 19, **dadurch gekennzeichnet, dass** in wenigstens eine zusätzliche Führungsvertiefung (114) der Gewindespindel (106) eine Führungsrolle (119) eingreift.

21. Maschine nach Anspruch 20, **dadurch gekennzeichnet, dass** mehrere Führungsrollen (119) vorgesehen sind.

22. Maschine nach einem der Ansprüche 16 bis 21, **dadurch gekennzeichnet, dass** die Lagerung des Innengewindeelements (126) an dem Halteelement (102) derart beschaffen ist, dass keine Relativbewegung in Längsrichtung der Gewindespindel (106) möglich ist.

23. Maschine nach einem der Ansprüche 16 bis 22, **dadurch gekennzeichnet, dass** das mit der Gewindespindel (106) kämmende Innengewindeelement (126) mit einer Außenverzahnung (134) versehen ist, die in drehfestem Eingriff mit einem Zahnrad (135), insbesondere Ritzel, und/oder mit einer Schnecke steht, welche(s) von einem Motor (107) angetrieben ist.

24. Maschine nach einem der Ansprüche 14 bis 23, **dadurch gekennzeichnet, dass** wenigstens ein eigentliches Führungs- oder Anpreßmittel (2) um eine Achse drehbar an einem länglichen Maschinenteil (23), insbesondere an einer Gewindespindel (106), gelagert ist, wobei sich die Lagerstelle in einem Endbereich (25) des länglichen Maschinenteils (23) befindet und die Drehachse etwa lotrecht zu der Längsachse des länglichen Maschinenteils (23) orientiert ist.

## Claims

1. A machine for wrapping or coating of profiles with a film, with one or several-means for guiding and/or pressing of the foil onto the related profile, e. g. feeding or draw rolls (2), brushes or squeegees, in which at least one feeding or pressing means (2) is arranged at a carrier (3) with one guide way and which -is adjustable along this guideway by means of a movable -chassis (13) of an adjustment mechanism (12), at which an adjustment motor (17) is fixed, **characterized in that** the rotary motion of the adjustment motor (17) is transmitted into a proportional shift of the retaining chassis (13).

2. A machine according to claim 1, **characterized by** the following features:
a) the adjustment motor (17) is coupled in a rotary proofed way with one or multiple drive wheels or rolls (15), which roll along a track (16) or guideway carrier (3) at a side (8-10) (each) and/or meshes with a toothing placed there,
b) the adjustment motor (17) and/or its coupling arrangement to the drive wheels or rolls (15) is self-locking.

3. A -machine according to claim 1 or 2, **characterized in that** at least one carrier (3) with a guideway for a guide or draw means (2) and/or its guideway runs along a circular path.

4. A machine according to one-of the preceding claims, **characterized in that** at least one carrier (3) with a guideway for a guide or draw means (2) is formed from a ring/(annular segment) of constant, originally approximately rectangular cross section.

5. A machine according to claim 4, **characterized in that** the longer cross section axis of the ring/(annular segment)- with approximately rectangular cross section runs in a radial way with respect to the centre point of the carrier (3).

6. A machine according to one of claims 4 or 5, **characterized in that** in the region of one or several edges of the ring/(annular segment ) the surfaces adjoining each other thereon meet in an arbitrary angle, e.g. 90° or more, so that bevelled traces 16 may resuit.

7. A machine according to one of the preceding claims, **characterized in that** at least one side (8-10) of the carrier (3) is provided with a row of teeth (11), which is preferably manufactured by treatment of the corpus of the carrier (3).

8. A machine according to one of the preceding claims, **characterized in that** the chassis (13) encompasses entirely or partially at least one carrier (3) with a guideway for a guiding or pressing means (2).

9. A machine according to one of the preceding claims, **characterized in that** at least two driving wheels or rolls (15) mounted to the chassis roll along diametral opposing coverage areas (8-10,16) of at least one carrier (3) with one guideway for a guiding or pressing means (2).

10. A machine according to one of the preceding claims, **characterized in that** the adjustment motor (17) is coupled via a reduction gear and/or a self-locking gear to the driving wheels or rolls (15), e.g. via a worm.

11. A machine according to one of the preceding claims, **characterized in that** the adjustment motor (17) is coupled directly or indirectly to- a position sensor.

12. A machine according to one of the preceding claims, **characterized in that** a second adjustment motor (19) is mounted to at least one carrier (3) with a guideway for a guiding or pressing means (2) encompassing chassis (13), whereby the drive axis of the second adjustment motor (19) is coupled to an adjustment axis (20) sticking out of the chassis (13) laterally (surface 21) in a rotational fixed manner, as well as parallel to the direction of transportation of a profile, particularly for one attachment piece (22) fixed thereto.

13. A machine according to claim 12, **characterized in that** the second adjustment motor (19) and/or its coupling to the adjustment axis (20) sticking out of the chassis (13) laterally (surface 21) is realised in a self-locking way.

14. A machine according to claim 12 or 13, **characterized in that** at a protection (22) of -a chassis (3) adjustable along the carrier (13), which is offset from the plane of at least one- carrier (13) with a guideway for a guiding -or pressing means in a direction of transportation of a profile which is to be coated, a guidance for an elongated machine part (23) is provided, which -carries the properly guiding or pressing means (2).

15. A machine according to claim 14, **characterized in that** the longitudinal axis of the elongated machine part (23) is oriented approximately parallel towards the plane of at least one carrier (3) with one guide way for a guiding or pressing means (2).

16. A machine according to one of the claims 14 to 15, **characterized in that** the elongated machine part (23) is formed as a threaded -spindle (106) whose external thread (113) forms an interlocking engagement in an axial direction with an element (126) with a complementary internal thread (127), whereby the internal thread element (126) is mounted to a retaining fixture (102) in a movable, particularly twistable way.

17. A machine according to claim 16, **characterized in that** the threaded spindle (106) shows one or several elongated recesses (114) at its jacket (112) additionally to its external thread (113) for engaging into the movable mounted internal thread element (126) and with a different pitch than that of the external thread, into which one or several elements (119) of the carrier element (102) engage for guidance of the threaded spindle (106).

18. A machine according to claim 17, **characterized in that** the additional guidance recess(es) (114) of the threaded spindle (106) runs (run) (approximately) in the longitudinal direction (122) thereof.

19. A machine according to one of claims 17 or 18, **characterized in that** the threaded spindle (106) exhibits a cross-iike or star-like cross section.

20. A machine according to one of claims 17 to 19, **characterized in that** a guidance roll (119) engages into at least one additional guidance recess (114) of the threaded spindle (106).

21. A machine according to claim 20, **characterized in that** multiple guidance rolls (119) are provided.

22. A machine according to one of claims 16 to 21, **characterized in that** the mounting of the internal thread element (126) to the carrier element (102) is constructed in such a manner, that no relative movement is possible in longitudinal direction of the threaded spindle (106).

23. A machine according to one of claims 16 to 22, **characterized in that** the internal thread element (126) meshing with the threaded spindle (106) is provided with external teeth (134), which are engaged in a torque proofed manner to a gear wheel (135), particularly a pinion, and/or with a worm, which is driven by a motor (107).

24. A machine according to one of claims 14 to 23, **characterized in that** at least one real guiding or pressing means (2) is mounted rotatably around an axis at an elongated machine part (23), particularly at a threaded spindle(106), whereby the bearing position is arranged in the end region (25) of the elongated machine part (23) and the rotational axis is oriented approximately perpendicular to the longitudinal axis of the elongated machine part (23).

## Revendications

1. Une machine à envelopper ou à recouvrir des profils avec de la feuille, avec un ou plusieurs moyen(s) pour avancer et/ou pour presser la feuille sur le profil correspondant, par exemple des rouleaux transporteurs ou de pressage (2), -des brosses ou -des racles, dans laquelle au minimum un moyen de conduction -ou de pressage (2) est fixé à un support(3) avec un guidage et est ajustable le long de ce guidage par un châssis mobile (13), un système mécanique de réglage (12), où un moteur d'ajustage (17) est fixé, **caractérisée par le fait que** le mouvement rotatif du moteur d'ajustage (17) est traduit en décalage proportionnel du châssis porteur (13).

2. Machine selon la revendication 1, **caractérisée par** les caractéristiques suivantes
a) le moteur d'ajustage (17) est couplé de manière fixe contre un mouvement rotatif avec une ou plusieurs roue(s) motrice(s) ou rouleaux moteurs (15), qui roulent respectivement le long d'un coté (8-10) ou piste (16) du support guidage (3) et/ou est engrené avec une dentelure (11).
b) le moteur d'ajustage (17) et/ou son installation de couplage avec des roues de motrice où des rouleaux moteurs(15) est construit(e) à blocage automatique.

3. Machine selon les revendications 1 où 2, **caractérisée par le fait qu'**au moins une porteuse (3) avec un guidage pour un moyen de conduction ou de pressage (2) et/ou son guidage procède à un trajet circulaire.

4. Machine selon une des revendications précédentes, **caractérisée en ce qu'**au moin une porteuse (3) avec un guidage pour un moyen de conduction ou de pressage (2) est construite par un (segment) d'anneau qui est formé d'une section égale, à l'origine approximativement rectengulaire.

5. Machine selon la revendication 4, **caractérisée par le fait que** la section transversale plus longue du (segment) d'anneau approximativement rectengulaire procède d'une manière radiale quant au centre de la porteuse (3).

6. Machine selon une des revendications 4 ou 5, **caractérisée par le fait qu'**à la région d'une où plusieurs lisières du segment d'anneau, les surfaces contigues se touchent à un angle quelconque, par exemple. à 90° ou plus, de sorte que des rayures biaisées (16) se forment le cas échéant.

7. Machine selon une des revendications précédentes, **caractérisée par le fait qu'**au moins un côté (8-10) de la porteuse (3) est construite avec une dentelure (11), qui est construite de préférence par un traitement du corps de base (3) de la porteuse.

8. Machine selon une des revendications précédentes, **caractérisée par le fait que** le châssis (13) sertit au moins une porteuse (3) avec un guidage pour un moyen de conduction ou de pressage (2) complètement où partiellement.

9. Machine selon une des revendications précédentes, **caractérisée par le fait qu'**au moins deux roues motrices ou rouleaux (15) montée(s) au châssis (13), qui se trouve aproximativement diametralement en face, roulent le long des étendues (8-10,16) d'au moins une porteuse (3) pour un moyen de conduction ou de pressage (2).

10. Machine selon une des revendications précédentes, **caractérisée par le fait que** le moteur d'ajustage (17) est couplé par une transmission démultipliée et/ou à autobloquage avec des roues motrices ou rouleaux (15), par exemple, par une vis sans fin.

11. Machine selon une des revendications précédentes, **caractérisée par le fait que** le moteur d'ajustage (17) est couplé directement ou indirectement avec un codeur de position.

12. Machine selon une des revendications précédentes, **caractérisée par le fait qu'**au moins au châssis (13) s'accroche au moins une porteuse (3) avec un guidage pour un moyen de conduction ou de pressage (2) un deuxiéme moteur d'ajustage (19) est appliqué, dont l'axe d'entrainement est couplé avec un axe d'ajustage (20) quasiment parallel concernant la direction du transport du profile à couvrir, qui emerge latéralement (coté 21) du châssis (13) d'une manière fixée contre le tournage notamment pour une embouchure (22) y fixée.

13. Machine selon la revendication 12, **caractérisée par le fait que** le deuxième moteur d'ajustage (19) et/ou son couplage avec l'axe d'ajustage (20), qui dépasse latéralement du châssis, est formé à blocage automatique.

14. Machine selon la revendication 12 ou 13, **caractérisée par le fait qu'**au crochet décalé du châssis (13) ajustable le long de la porteuse (3) en direction du transport du profil à recouvrir, soit en face du niveau d'au moins une porteuse (3) avec un guidage pour un moyen de conduction ou de pressage (2) un guidage pour une oblongue partie porteuse de la machine, qui porte le propre moyen de conduction ou de pressage (2), est prevu.

15. Machine selon la revendication 14, **caractérisée par le fait que** l'axe longitudinal de l'oblongue qui est une partie de la machine (23) est orienté environ parallelement au niveau d'au moins d'une porteuse (3) avec un moyen de conduction ou de pressage (2).

16. Machine selon une des revendications 14 à 15, **caractérisée par le fait que** l' oblongue qui est une partie de la machine (23) est construite dans une forme de fuseau de filetage (106), dont son filetage male (113) forme une connexion à forme finale au sens axiale avec un élément et son filetage femelle complémentaire (127), cependant le filetage femelle (126) est monté mobilièrement, notamment pivotablement.

17. Machine selon la revendication 16, **caractérisée par le fait que** le fuseau de filetage (106) montre sur son manteau (112) une ou plusieurs empreintes élongée(s) (114) supplémentairement à son filetage male (113) pour l'intervention dans l'élément du filetage femelle (126) calé mobilièrement et avec une inclinaison differente que ce filetage male (113), dans lequel un ou plusieurs éléments (119) de l'élément portant (102) à guidage du fuseau de filetage (106) s'accroche(nt).

18. Machine selon la revendication 17, **caractérisée par le fait que** l'empreinte(s) de guidage additionelle(s) (114) du fuseau de filetage (106) procède(nt) (environ) à leurs directions longitudinales (122).

19. Machine selon la revendication 17 ou 18, **caractérisée par le fait que** le fuseau de filetage (106) montre une section cruciforme ou en étoile.

20. Machine selon une des revendications 17 à 19, **caractérisée par le fait qu'**au moins une empreinte de guidage additionel (114) du fuseau de filetage (106) s'encliquète à une roue motrice (119).

21. Machine selon la revendication 20, **caractérisée par le fait que** plusieurs rouleaux de guidage (119) sont prévus.

22. Machine selon une des revendications 16 à 21, **caractérisée par le fait que** le palier du filetage femelle (126), qui se trouve au niveau de l'élément porteur (102), est construit de cette manière, afin qu'aucun mouvement relatif au sens longitudinal du fuseau de filetage ne soit possible(106).

23. Machine selon une des revendications 16 à 22, **caractérisée par le fait que** l'élément du filetage femelle (126), qui combe avec le fuseau de filetage (106), est nati d'une dentelure extérieure(134), qui s'encliquète non-pivotablement à une roue dentée (135), notamment à un pignon et/ou à une vis sans fin, qui est entrainé par un moteur (107).

24. Machine selon une des revendications 14 à 23, **caractérisée par le fait que** au moins un propre moyen de conduction ou de pressage (2) est monté pivotablement au tour d'un axe à une pièce oblongue de la machine (23), notamment au fuseau du filetage (106), cependant le palier se trouve à une régione finale (25) de la pièce oblongue de la machine (23) et le pivot est orienté environ perpendiculairement à l'axe longitudinal de la pièce oblongue de la machine (23).
